(19)

**Europäisches Patentamt**

**European Patent Office**

**Office européen des brevets**

(11) **EP 3 073 417 A1**

(12) **EUROPEAN PATENT APPLICATION**

(43) Date of publication:
**28.09.2016 Bulletin 2016/39**

(51) Int Cl.:
***G06K 9/46*** (2006.01)     ***G06F 17/30*** (2006.01)

(21) Application number: **15305457.2**

(22) Date of filing: **27.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
- **Vigouroux, Jean-Ronan
  35576 Cesson-Sévigné (FR)**
- **Lefebvre, Frédéric
  35576 Cesson-Sévigné (FR)**
- **Thebault, Cédric
  35576 Cesson-Sévigné (FR)**

(74) Representative: **Huchet, Anne
Technicolor
1, rue Jeanne d'Arc
92443 Issy-les-Moulineaux Cedex (FR)**

(54) **METHOD AND APPARATUS FOR IMAGE RETRIEVAL BASED ON A PROBABILISTIC NON-PARAMETRIC GEOMETRIC VERIFICATION**

(57)    A technique for image retrieval is proposed based on a probabilistic non-parametric geometric verification which includes checking the intersection property within keypoint quadruplets of images. Additional checks may be performed for convexity and alignment of keypoints and inlier ratio. The technique yields better performance than standard techniques based on geometric models for cases of non-planar deformations as in 3D objects with larges changes in venture point, such as buildings, or lenses with large geometrical deformations, such as fisheyes. The technique may also be used to detect outliers which may be discarded, prior to the calculation of a geometric model, in order to improve the performance of such model.

Figure 6A

EP 3 073 417 A1

**Description**

TECHNICAL FIELD

The present principles relate to image retrieval techniques.

BACKGROUND

A few years ago, the problems of representation and retrieval of visual media were confined to specialized image databases (geographical, medical, pilot experiments in computerized slide libraries), in the professional applications of the audiovisual industries (production, broadcasting and archives) and in computerized training or education. However, the present development of multimedia technology and information highways has put content processing and retrieval of visual media at the core of key application domains: digital and interactive video, large distributed digital libraries, multimedia publishing.

An image retrieval system is a computer system for browsing, searching and retrieving images from a large database of digital images. Image retrieval or pairwise matching of images currently rests on a multistep process, consisting in:

1. Extracting keypoints from the query image using a known algorithm such as the Scale Invariant Feature Transform (SIFT). Keypoints can be "points of interest", such as sets of visually salient image points in an original SIFT implementation, or points selected according to another algorithm, for instance, points of a grid in a Dense SIFT implementation;
2. Collecting candidate matching images using for instance an aggregated representation of the keypoints such as the Fisher Vector (FV); and then
3. Checking each candidate by associating the keypoints in both images and performing a geometry verification to check if the keypoints can be located on a same object.

Currently the checking is done by computing a homographic model explaining the transformation between the two images. This is not robust to non-planar deformation, such as 3D objects with larges changes in venture point, such as buildings, or lenses with large geometrical deformations, such as fisheyes. It requires in addition a very precise determination of the position of the keypoints.

ORSA, an *a contrario* RANSAC (RANdom SAmple Consensus) algorithm is a best in class algorithm to check if a homographic model exists between two pictures by using keypoint matching. But it puts in prominent position some limitations:

1. There is not always a homographic model, for instance when there are large 3D deformations (big objects seen from close distances, such as buildings), or in case of large angle lenses, or in case of deformable objects.
2. ORSA needs accurate coordinates for estimating correctly a model and inlier ratio.
3. ORSA is a complex and time consuming algorithm.
4. One needs to define a model (homographic, affine) at the beginning even if the level of distortion and the number of parameters that describe the distortion are not known. If ORSA is asked to find an affine model while the distortion is homographic, ORSA will not efficiently find an (accurate) model.

It is therefore of interest to propose more flexible and efficient strategies for image retrieval. The present principles provide such a strategy.

SUMMARY

The present principles provide a technique for image retrieval based on a probabilistic non-parametric geometric verification.

According to one aspect of the present principles, a method of image retrieval including: accessing a plurality of keypoints in a first image and a corresponding plurality of keypoints in a second image; selecting at least one keypoint quadruplet in the first image and a corresponding at least one keypoint quadruplet in the second image; checking the intersection property for the at least one keypoint quadruplet in the first image and the corresponding at least one keypoint quadruplet in the second image; calculating an agreement rate for the first and second images based on the intersection property; and retrieving the first image based on the agreement rate.

According to a particular embodiment, the method further includes:

permuting at least once the at least one keypoint quadruplet in said first image if said checking step fails for said keypoint quadruplet; and
checking again the intersection property for said at least one permuted keypoint quadruplet in the first image and the corresponding at least one permuted keypoint quadruplet in the second image.

According to a particular embodiment, the method comprises

discarding (645) the at least one keypoint quadruplet in the first image after the step of checking again if the intersection property fails for all permutations.

According to a particular embodiment, the method further includes:

calculating an intersection histogram for each keypoint in the first image based on the intersection property;
calculating a convex histogram for each keypoint in the first image based on the intersection property; and
calculating an inlier ratio based on said convex and intersection histograms,
prior to the step of calculating an agreement rate, wherein the agreement rate is also a function of said inlier ratio.

According to a particular embodiment, the method further includes:

determining outlier keypoints for said first image based on said inlier ratio;
discarding at least one outlier keypoint in the first image and corresponding at least one keypoint in the second image; and
calculating a geometric model between the first and second image based on the non-discarded keypoints,
prior to the step of calculating an agreement rate, wherein the agreement rate is also a function of said geometric model.

According to a particular embodiment, the method further includes:

discarding the at least one keypoint quadruplet in the first image prior to the step of checking if the at least one keypoint quadruplet is not a convex quadruplet.

According to a particular embodiment, the method further includes:

discarding the at least one keypoint quadruplet in the first image prior to the step of checking if the at least one keypoint quadruplet in the first image and corresponding quadruplet in the second image are not a convex quadruplets.

According to a particular embodiment, the method further includes:

discarding the at least one keypoint quadruplet in the first image prior to the step of checking if a keypoint in the at least one keypoint quadruplet is aligned with two other keypoints in the same keypoint quadruplet.

According to a particular embodiment, the agreement rate is based on the presence of intersections (6802) in corresponding keypoint quadruplets in the first and second images.
According to a particular embodiment, a keypoint quadruplet contains distinct keypoints.
According to a particular embodiment, the surface of a keypoint quadruplet satisfies a dimension threshold.
According to one aspect of the present principles, an apparatus for image retrieval including a processor, for receiving at least one input/output; and at least one memory in signal communication with the processor, the processor being configured to: access a plurality of keypoints in a first image and a corresponding plurality of keypoints in a second image; select at least one keypoint quadruplet in the first image and a corresponding at least one keypoint quadruplet in the second image; check the intersection property for the at least one keypoint quadruplet in the first image and the corresponding at least one keypoint quadruplet in the second image; calculate an agreement rate for the first and second images based on the intersection property; and retrieve said first image based on the agreement rate.
According to a particular embodiment, the processor is further configured to:

permute at least once the at least one keypoint quadruplet in said first image if said checking the intersection rate fails for said keypoint quadruplet; and
check again the intersection property for said at least one permuted keypoint quadruplet in the first image and the corresponding at least one permuted keypoint quadruplet in the second image.

According to a particular embodiment, wherein the processor is further configured to:

discard the at least one keypoint quadruplet in the first image after checking again the intersection property if the intersection property fails for all permutations.

According to a particular embodiment, the processor is further configured to

calculate an intersection histogram for each keypoint in the first image based on the intersection property;
calculate a convex histogram for each keypoint in the first image based on the intersection property; and
calculate an inlier ratio based on said convex and intersection histograms,
prior to calculating an agreement rate, wherein the agreement rate is also a function of said inlier ratio.

According to a particular embodiment, the processor is further configured to:

determine outlier keypoints for said first image based on said inlier ratio;
discard at least one outlier keypoint in the first image and corresponding keypoint in the second image; and
calculate a geometric model between the first and second image based on the non-discarded keypoints,

wherein the agreement rate is also a function of said geometric model.
According to a particular embodiment, discard the at least one keypoint quadruplet in the first image before checking if the at least one keypoint quadruplet is not a convex quadruplet.
According to a particular embodiment, the processor is further configured to:

discard the at least one keypoint quadruplet in the first image before checking if the at least one keypoint quadruplet in the first image and corresponding quadruplet in the second image are not convex quadruplets.

According to a particular embodiment, the processor is further configured to:

discard the at least one keypoint quadruplet in the first image prior to checking the intersection property if a keypoint in the at least one keypoint quadruplet is aligned with another keypoint in the same keypoint quadruplet.

According to a particular embodiment, the agreement rate is based on the presence of intersections in corresponding keypoint quadruplets in the first and second images.
According to a particular embodiment, the agreement rate is based on a score obtained by weighting each keypoint by a scalar representing its quality or importance.
According to a particular embodiment, a keypoint quadruplet contains distinct keypoints.
According to a particular embodiment, the surface of a keypoint quadruplet satisfies a dimension threshold.
Additional features and advantages of the present principles will be made apparent from the following detailed description of illustrative embodiments which proceeds with reference to the accompanying figures.

BRIEF DESCRIPTION OF THE DRAWINGS

The present principles may be better understood in accordance with the following exemplary figures briefly described below:

Figure 1 illustrates the intersection property for keypoints in an image;
Figure 2 illustrates examples of non-convex quadruplets;
Figure 3 illustrates examples of convex quadruplets;
Figure 4 illustrates the performance of an image retrieval method according to the present principles applied to the Holydays dataset;
Figure 5 illustrates the performance of an image retrieval method according to the present principles applied to the ZuBud dataset;
Figure 6A-E illustrates a flowchart of an exemplary image retrieval method according to the present principles; and
Figure 7 illustrates a block diagram of a computing environment within which the present principles may be implemented and executed.

DETAILED DISCUSSION OF THE EMBODIMENTS

The present principles relate to image retrieval techniques and, more specifically, to a technique based on a probabilistic non-parametric geometric verification.

Historically, image retrieval techniques were based on a homographic or an affine transformation between the two images. In geometry, a transformation that maps lines to lines (but does not necessarily preserve parallelism) is a homographic or projective transformation. Any plane projective transformation can be expressed by an invertible 3x3 matrix in homogeneous coordinates; conversely, any invertible 3x3 matrix defines a projective transformation of the plane. An affine transformation is a function between affine spaces which preserves points, straight lines and planes. Also, sets of parallel lines remain parallel after an affine transformation. An affine transformation does not necessarily preserve angles between lines or distances between points, though it does preserve ratios of distances between points lying on a straight line.

Instead of seeking the parameters of deformation model between the two images, the present principles check local invariants, by proposing to check a property of conservation of intersection of segments. A stochastic method is used, based on evaluating the number of failures of the checks. If the number of failures is a large proportion of the tests, the images are different with a high probability. If the number of failures is low the images are the same with a high probability.

Let A, B, C, D be four points on an image (query image) of an object, and let A', B', C', D' be the corresponding points on another image (reference image) of the same object. The four points are supposed to be visible on both images. According to the present principles, for most of the reasonable deformations between the two images, corresponding for instance to a change of the venture point:

    1. If the segments AB and CD intersect then the segments A'B' and C'D' also intersect.
    2. If the segments AB and CD do not intersect then the segment A'B' and C'D' also do not intersect.

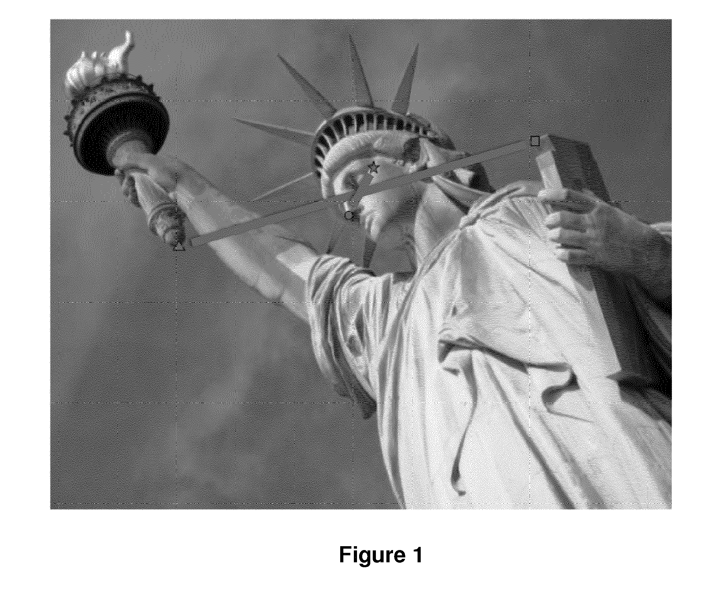

There is an agreement in the intersection of AB and CD in the two images of a same object. This property is hereby called the *intersection property.* Conversely, if the matching points are on dissimilar objects, the intersection property will hold with a small probability. Figure 1 illustrates the intersection property for keypoints in an image of the Statue of Liberty.

Based on this property, the present principles propose the following algorithm: Let 11 and 12 be two images candidates to the geometric verification test. Let {A1, A2... An} be the matching or key points in the first (or query) image, and {A1', A2'... An'} be the corresponding points in the second (or reference) image. Repeatedly draw four points A, B, C, D in the first list and let A', B', C', D' be their corresponding points in the second list. Check the intersection property. If the agreement (intersection or non-intersection) occurs in most the cases, the two images correspond to the same object with a high probability. It the agreement occurs with a probability under a certain threshold (for example 0.5), the two images correspond to different objects.

**Intersection of segments**

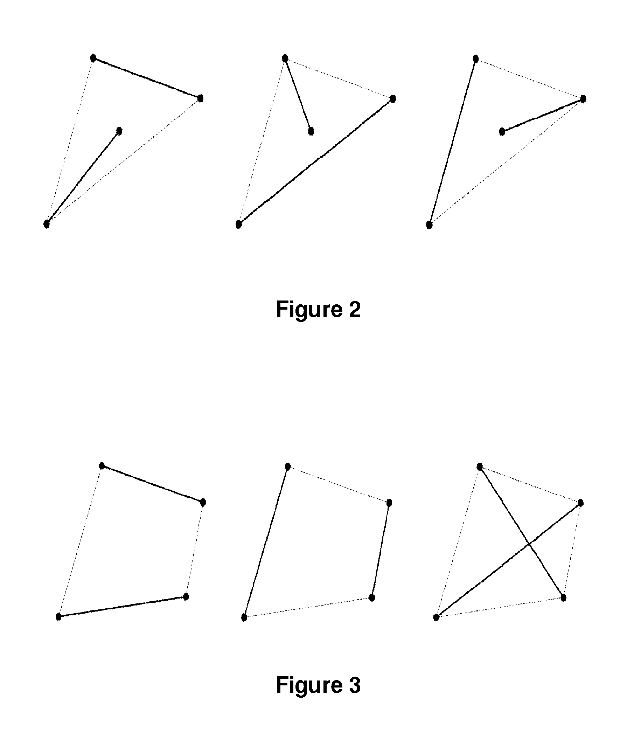

Regarding the intersection of segments, it can be observed in a first step that four points of the plane cannot lead to intersecting segments if one of them lies within the triangle formed by the three other ones. This is equivalent to the non-convexity of the quadruplet, as illustrated in Figure 2. To seek intersections in quadruplets with known probability of intersection and non-intersection the present principles may limit the exploration to convex quadruplets, as illustrated in Figure 3.

**Filtering**

The present principles may check the intersection property in different kinds of quadruplets with one or more of the following properties:

- Any collection of four points
- Sets where the points are checked to be different
- Sets which are convex
- Sets where no point is aligned with two others
- Sets which are convex and associated to a convex set of points
- Quadruplets large enough (surface is more than 1% of the image for instance)
- Quadruplets not too large (surface is less than 10% of the image for instance)

The algorithm will check the intersection property by iterating on quadruplets drawn in the set of matching points. Conditions may be imposed, such as the ones listed above, to obtain more decisive criteria. But testing on a large number of quadruplets may be more profitable.

**Scores**

Regarding the decision of "same object" or "not same object", it must be done on a score that is issued by the algorithm. This score is determined by checking the intersection property. The score can be one of:

- The number of failures

- The number of success

- The ratio of number of failures / number of trials

- A score obtained by weighting each keypoint by a scalar representing its quality as a keypoint, obtained from the detector for instance, or pertinence of the point in the matching process.

**Implementations**

The number of keypoints retained in an image may be in the order of hundreds. Hence, the number of quadruplets in an image may be in the millions or billions (fourth power of the number of keypoints). However, one does not need to check all quadruplets and the exploration may be limited to a percentage of the quadruplets, *e.g.*, a few hundred thousand quadruplets. The elimination of undesirable quadruplets (e.g., non-convex) as mentioned above, may also further decrease the computational effort.

In an exemplary embodiment of the present principles, the existence of an intersection for the segments AB and CD may be determined using a counterclockwise function which checks if three points are in counterclockwise order. This can be accomplished by defining a counterclockwise function, CCW as:

$$CCW(A, B, C) = \begin{cases} TRUE, & \text{if } [(C_y - A_y) * (B_x - A_x) > (B_y - A_y) * (C_x - A_x)] \\ FALSE, & \text{otherwise} \end{cases} \quad (1)$$

where $(A_x, A_y)$ are the two-dimensional coordinates of point A. The intersection of the segments AB and CD is then defined as:

$$Intersect(A, B, C, D) = (CCW(A, C, D) \neq CCW(B, C, D)) AND (CCW(A, C, D) \neq CCW(B, C, D)) \quad (2)$$

A skilled artisan will appreciate that there are other ways of checking segment or line intersection. For example, one may describe the line which contains each segment and find their point of intersection, if any, checking if the intersection belongs to both segments.

The segment intersection check is then iteratively implemented for different selections of the quadruplets on which to perform the test. Let L and L' be the sets of keypoints associated with image I and I', respectively. The keypoint L[k] of image I is associated with the keypoint L'[k] of image I'. Assuming N_trials to be the number of tests to perform, an exemplary embodiment of the check between images I and I' satisfies the following steps:

1. Draw four distinct keypoints in L: A, B, C, D and obtain the corresponding keypoints in L': A', B', C', D';
2. Check the Intersection of segments AB and CD: R = intersect(A,B,C,D);
3. Check the intersection of segments A'B' and C'D': R' = intersect(A',B',C',D');
4. If R ≠ R', then N_disagreement = N_disagreement + 1 (alternatively, if R = R', then N_agreement = N_agreement + 1);
5. Else check for the end: if number of tests < N_trials, then return to step 1;
6. Else check for a match: if N_disagreement < Threshold_dis (if N_agreement > Threshold_agree), then the images match; otherwise the images do not match. Threshold may be a fraction of the number of tests N_trials, *e.g.*, 0.25*N_trials.

A skilled artisan will appreciate that a keypoint or "point of interest" is characterized by its localization (coordinates) and its description. The localization can be sparse, as in a SIFT original implementation, or dense (organized in a regular grid), as in a Dense SIFT implementation. The keypoint description is used for the keypoint association in order to generate a list of correspondence between the Query and the Reference points. And the coordinates of the keypoints are used to check if the keypoint association is correct or not, that is, if there is a match between the two images.

In general, the association of the keypoints in the query (Q or I) image with the keypoints in the reference (R or I') image is a complex task. There are different state-of-the-art ways to perform this association, ensuring unicity of association in both ways: association of points from Q to R and from R to Q. Standard algorithms (*e.g.*, NNS, Nearest Neighbor Search) may create some errors, on outlier points. In order to make the association, for each keypoint in the Q image (e.g., about 500 keypoints) one has to find the closest keypoint in the R image (about 500 keypoints). The distance is measured by the distance of the SIFT vectors at these points. However, these computations can be made in fractions of seconds.

In one embodiment of the present principles, only keypoints associated with convex quadruplets are chosen. In this case, step 1.5 (after step 1 and before step 2 above) requires that quadruplet A, B, C, D is convex to proceed, otherwise, the check returns to step 1. In another embodiment, keypoints of convex quadruplets are chosen which are also associated with keypoints of convex quadruplets in the equivalent image. In this case, besides the convexity check of quadruplet A, B, C, D, step 1.5 also checks if quadruplet A', B', C', D' is convex in order to proceed, otherwise, the algorithm returns to step 1. Convexity may be checked by ensuring that no keypoint in a quadruplet lies within the triangle created by the three remaining keypoints. In addition, a quadruplet may also be checked to ensure that no point is aligned with two others, that is, no point will lie on one of the three segments of the triangle created by the other three points.

In one embodiment of the present principles, a permutation of the keypoints A, B, C, D is tested against a corresponding permutation in the keypoints A', B', C', D' on the second image, I'. At least one permutation of the four keypoints is tested. Quadruplet A, B, C, D may be discarded for which a point A, B, C or D is aligned with two other points. The intersections are checked in the same order:

- AB intersect CD and A'B' intersect C'D'
- or AD intersect BC and A'D' intersect B'C'
- or AC intersect BD and A'C' intersect B'D'

In one embodiment of the present principles, a permutation of the four keypoints must result in an intersection in order to be checked. Quadruplet A, B, C, D is permuted into Ap, Bp, Cp, Dp in order to find at least one intersection between the keypoints ApBp and CpDp if the original quadruplet does not satisfy this intersection property. In this case, Ap, Bp, Cp and Dp includes the meaningful possibilities described above. Then, the corresponding permuted quadruplet in I', that is, Ap', Bp', Cp', Dp' is also tested for the intersection property. An exemplary embodiment satisfies the following steps:

1. Draw four distinct keypoints in L: A, B, C, D and obtain the corresponding keypoints in L': A', B', C', D';
2. Check if A, B, C, D is convex; otherwise, return to 1;
3. Transform A, B, C, D into Ap, Bp, Cp, Dp, wherein Ap, Bp, Cp, Dp may be A, B, C, D or a permutation of A, B, C, D, for which the segments ApBp and CpDp intersect: R = intersect(Ap,Bp,Cp,Dp) = 1. Otherwise, return to 1;
4. Check the intersection of segments Ap'Bp' and Cp'Dp': R' = intersect(Ap',Bp',Cp',Dp');
5. If $R \neq R'$, then N_disagreement = N_disagreement + 1;
6. Else check for the end: if number of tests < N_trials, then return to step 1;
7. Else check for a match: if N_disagreement < Threshold_dis, then the images match; otherwise the images do not match. Threshold may be a fraction of the number of tests N_trials, e.g., 0.25*N_trials;

In one embodiment of the present principles, in addition to checking the permutations with intersection, one counts the ratio of correct inliers. In statistics, inliers are observation points close to other observations. The following steps are included:

a. Select a permutation of A, B, C, D (image I or 1 or query) for which there is an intersection;
b. Check the existence of an intersection in the corresponding A', B', C', D' (image I' or 2 or reference) in the same order as described above.
c. Discard the quadruplet A, B, C, D for which a point A, B, C, or D is aligned with two other points.
d. Count the number of couples AA', BB', CC', DD' where (1) and (2) are satisfied. If AA' is voting for intersection, AA' is said correct.
e. Calculate the ratio of correct AA' to incorrect AA'. If the ratio of correct AA' to incorrect AA' is satisfied for AA', the couple AA' is said valid. We calculate the ratio of valid couple to non-valid couple.

An exemplary embodiment of the present principles satisfies the following steps. Assume N_intersect to be the number of intersections in both L and corresponding L' quadruplets; N_convex to be the number of convex quadruplets in both L and L'; Histo_intersect[n = 1 to N] to be the intersection histogram, representing the number of intersection checks per keypoing (n = 1 to N); Histo_convex[n = 1 to N] to be the convex histogram, representing the number of convex quadruplets checked per keypoint (n = 1 to N), where N is the number of keypoints in L and L'.

1. Draw four distinct keypoints in L: A, B, C, D and obtain the corresponding keypoints in L': A', B', C', D';
2. Check the intersection property for quadruplet in L for all permutations in the quadruplet:

$$R1 = intersect(A, B, C, D)$$
$$R2 = intersect(A, D, B, C)$$
$$R3 = intersect(A, C, B, D)$$

3. If there is at least one intersection (R1 = TRUE or R2 = TRUE or R3 = TRUE), proceed; otherwise, return to 1;
4. Check intersection property for quadruplet in L':

$$R1' = intersect(A', B', C', D')$$
$$R2' = intersect(A', D', B', C')$$
$$R3' = intersect(A', C', B', D')$$

5. If quadruplets in L and L' are convex, then:

$$N\_convex = N\_convex + 1$$
$$Histo\_convex[\,n\_A\,] = Histo\_convex[\,n\_A\,] + 1$$
$$Histo\_convex[\,n\_B\,] = Histo\_convex[n\_B] + 1$$
$$Histo\_convex[\,n\_C\,] = Histo\_convex[\,n\_C\,] + 1$$
$$Histo\_convex[\,n\_D\,] = Histo\_convex[\,n\_D\,] + 1;$$

where n_A is the corresponding number of keypoint A (from 1 to N); I is convex if R1 = TRUE or R2 = TRUE or R3 = TRUE; I' is convex if R1' = TRUE or R2' = TRUE or R3' = TRUE.

6. If intersection property is satisfied in L and L', then:

$$N\_intersect = N\_intersect + 1;$$
$$Histo\_intersect[\,n\_A\,] = Histo\_intersect[\,n\_A\,] + 1;$$
$$Histo\_intersect[\,n\_B\,] = Histo\_intersect[\,n\_B\,] + 1;$$
$$Histo\_intersect[\,n\_C\,] = Histo\_intersect[\,n\_C\,] + 1;$$
$$Histo\_intersect[\,n\_D\,] = Histo\_intersect[\,n\_D\,] + 1;$$

where the intersection property is satisfied for both L and L' if ((R1 and R1') or (R2 and R2') or (R3 and R3')) = TRUE.

7. Check for the end: if number of tests < N_trials, then return to step 1;
8. Calculate the Ratio_vote for each keypoint n = 1 to N:

$$Ratio\_vote[\,n\,] = Histo\_intersect[\,n\,]/Histo\_convex[\,n\,];$$

9. Calculate the valid number of keypoints, N_valid, for n = 1 to N:

If Ratio_vote[ n ] > Treshold_ratiovote, then N_valid = N_valid + 1;

10. Else calculate the ratio of correct inliers:

$$Ratio\_valid = N\_valid / N;$$

11. Check for a match:

i. Based on intersection:

if N_intersect > Threshold_intersect, then the images match; otherwise the images do not match.

Threshold_intersect may be a fraction of the number of tests N_trials, e.g., 0.25*N_trials;

ii. Based on intersection and Ratio of correct inlier:

If N_intersect * Ratio_valid > Threshold_intersect_ratio_valid, then the images match; otherwise the images do not match.
Threshold_intersect_ratio_valid may be a fraction of the number of tests N_trials, *e.g.*, 0.25*N_trials;

In one embodiment of the present principles, checking intersecting segments and ratio of correct inlier can be used as a pre-processing step to select inliers and discard outliers prior to an ORSA model estimation. A basic method consists in filtering out the outlier by discarding all kepoints for which the ratio of correct inlier is smaller than a threshold. In step 9 above, if Ratio_vote[ n ] ≤ Treshold_ratiovote, then the keypoint is considered an outlier. Outliers are observation points distant from other observations, as opposed to inliers. Therefore, steps 1-9 apply prior to the ORSA model estimation, wherein step 9 includes an additional condition: Else discard keypoint n in L and L'. It can also be observed that Ratio_valid or inlier ratio is N_valid / N, the number of inliers is N_valid and the number of outliers is N-N_valid.

**Performance Evaluation**

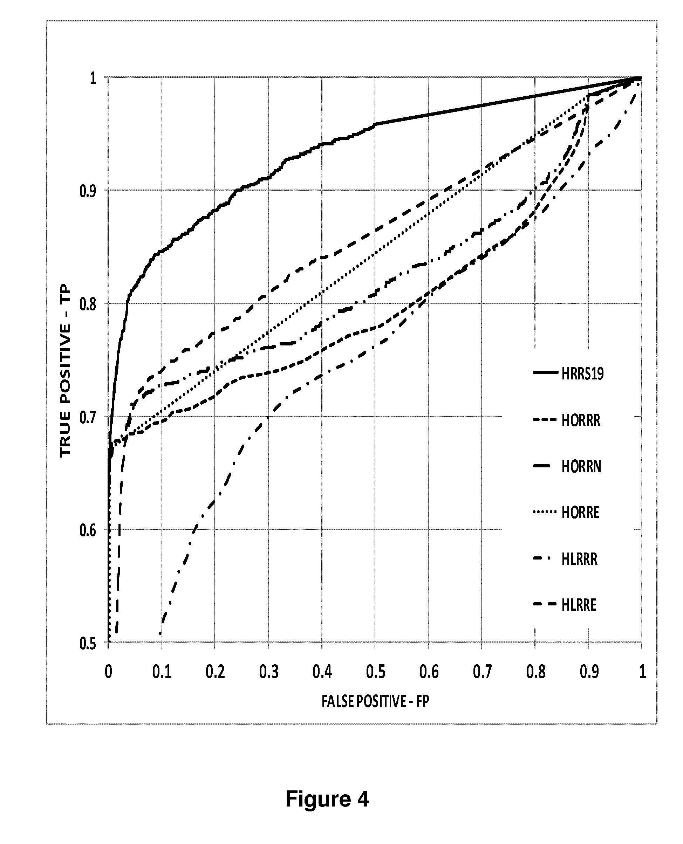

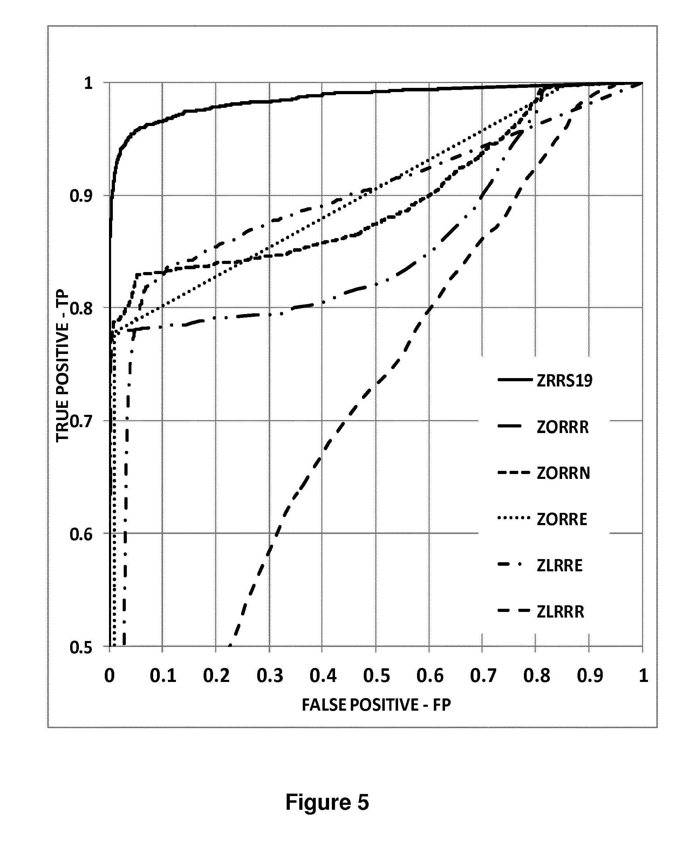

The present principles have been tested for a couple of datasets, according to the algorithm described above based on intersecting segments and ratio of correct inlier. Receiver Operating Characteristic (ROC) curves were plotted, as shown if Figures 4 and 5.
The ROC curve is a fundamental tool for diagnostic test evaluation. In a ROC curve the true positive rate (TP, Sensitivity) is plotted in function of the false positive rate (FP, 100-Specificity) for different cut-off points of a parameter. Each point on the ROC curve represents a sensitivity/specificity pair corresponding to a particular decision threshold. The area under the ROC curve (AUC) is a measure of how well a parameter can distinguish between two diagnostic groups (diseased/normal).
To obtain a curve one starts from a Ground Truth of pairs of similar objects and/or pairs of dissimilar objects. In Figure 5, a well-known database of pictures of buildings (ZuBud, 201 buildings, 5 views per building) was used, and in Figure 4, another well-known database called the CDVS distractor was used (INRIA Holidays dataset, 500 image groups). In this evaluation, a fixed set of 5000 pairs of similar objects, and 15000 pairs of dissimilar objects were built.
If a test method outputs a large number when it considers that a pair is composed of similar objects and a small or negative value when it considers that pair is composed of dissimilar objects, this test is a similarity function. One can then order the pairs in ascending order for the tests.
The ROC curve is defined as the curve (False Positive Rate, True Positive Rate) for the different values of the threshold where:

False Positive Rate = FP / (FP + TN)
True Positive Rate (Sensitivity) = TP / (TP + FN)

In accordance with Table 1 below.

Table 1

| Threshold | Similar Pairs | Dissimilar Pairs |
| --- | --- | --- |
| High | True Positive (TP) | False Positive (FP) |
| Low | False Negative (FN) | True Negative (TN) |

Interestingly, the ROC curve does not change when an increasing function is applied to the score. This allows one to compare different tests with scores in different scales, provided that the larger scores mean the most similar objects.
In Figures 4 and 5, the feature captured to plot FP/TP is N_intersect *Ratio_valid detailed just before (step 10 above). The ROC curve allows one to determine the Threshold_intersect_ratio_valid for a given use case (tradeoff FP/TP). Figure 4 illustrates the ROC curves for the Holydays dataset and Figure 5 illustrates ROC curves for the ZuBud dataset. The curves were created utilizing VLSIFT (SIFT features using the VLFeat library) descriptors and VLUBC pairwise matching.
In Figure 4, the curves shown are as follows: the curve according to the present principles based on inlier ratio (Holidays_ROC_Res_Scoreccw, HRRS19), Inlier Ratio with ORSA (Holidays_ORSA_ROC_Res_Ratio, HORRR), Number of False Alarms (NFA) with ORSA (Holidays_ORSA_ROC_Res_NFA, HORRN), Pixel Error with ORSA (Holidays_ORSA_ROC_Res_Error, HORRE), Inlier Ratio with Locally Optimized (LO) RANSAC (Holidays_LORANSAC_ROC_Res_Ratio, HLRRR) and Pixel Error with LO-RANSAC (Holidays_LORANSAC_ROC_Res_Error, HLRRE).

In Figure 5, the curves shown are as follows: the curve according to the present principles based on inlier ratio (ZuBud_ROC_Res_Scoreccw, ZRRS19), Inlier Ratio with ORSA (ZuBud_ORSA_ROC_Res_Ratio, HORRR), Number of False Alarms (NFA) with ORSA (ZuBud_ORSA_ROC_Res_NFA, HORRN), Pixel Error with ORSA (ZuBud_ORSA_ROC_Res_Error, HORRE), Inlier Ratio with Locally Optimized (LO) RANSAC (ZuBud_LORANSAC_ROC_Res_Ratio, HLRRR) and Pixel Error with LO-RANSAC (ZuBud_LORANSAC_ROC_Res_Error, HLRRE).

For geometrical models (homographic, affine) using ORSA or LO-RANSAC, one can compute the ratio of the number of inliers versus the number of keypoints (or number of outliers), since the number of inliers is given by the estimator of the geometric model. if the pixel error of reconstruction using the model is too high, it implies that the model is not correct, that is, one cannot fit the compensate image (from the query using the model) with the reference.

The TP versus FP curves have a simple interpretation: the better the technique, the higher the TP values for small FP values. This means that with very few False Positives (FP), the curve very quickly reaches a True Positive (TP) value close to 1. In other words, if very few mistakes are accepted, the right decision can be made more quickly and reliably (close to 1).

The results for both Figure 4 and Figure 5 show that the technique of the present principles result in significantly better performance than the prior art represented by the other curves. It particularly shows very good performance for the ZuBud dataset. This dataset has large deformations in term of point of view, *i.e.,* some monuments have been taken in different angles with a camera. This means that for some of them there is no homographic model.

This algorithm does not use a parametric model. Hence, it has "standard" performances, that is, comparable to existing algorithms relying on homographic models, when a homographic model could be exhibited (*e.g.*, with planar objects, rigid objects seen from afar, etc.). But in the cases where such a model does not exist, (*e.g.*, with 3D objects at close distance, deformable objects), our algorithm has better performances than the state of the art. The advantages of the algorithm of the present principles is as follows:

- It does not require a parametric deformation model, in particular homographic or affine.
- It is applicable in the case of lenses with larges deformations, such as fisheyes.
- It does not require a very accurate localization of the keypoints.
- It is resistant to 3D deformations, which occur for instance in the matching of buildings.
- It is six times faster than the state-of-the-art ORSA method.
- In addition it is highly parallelizable.

On the other hand, there are limitations to the algorithm of the present principles as follows:

- The algorithm is able to cope with large 3D effects, provided that the descriptors can be matched. However standard descriptors such as SIFT do not always stay invariant at large changes in venture point.
- No deformation model is found by the algorithm. In particular the location of the matched object is not found directly.
- The initial assumption of persistence of intersection or non-intersection of segments does not always hold for objects with large 3D effects.
- A minimal set of corresponding keypoints must be available, to enable enough checks of the intersection property to get statistical relevance.
- The exact case when the property does not hold is difficult to define. Intuitively it occurs when the object has feature points which are far from the convex hull of the object. However, even for one such object, the property will hold for most of the quadruplets of matching points.
- The assumption of persistence of intersection does not hold for transparent objects, if some points are located on one side of the object and other points are located on the other side.

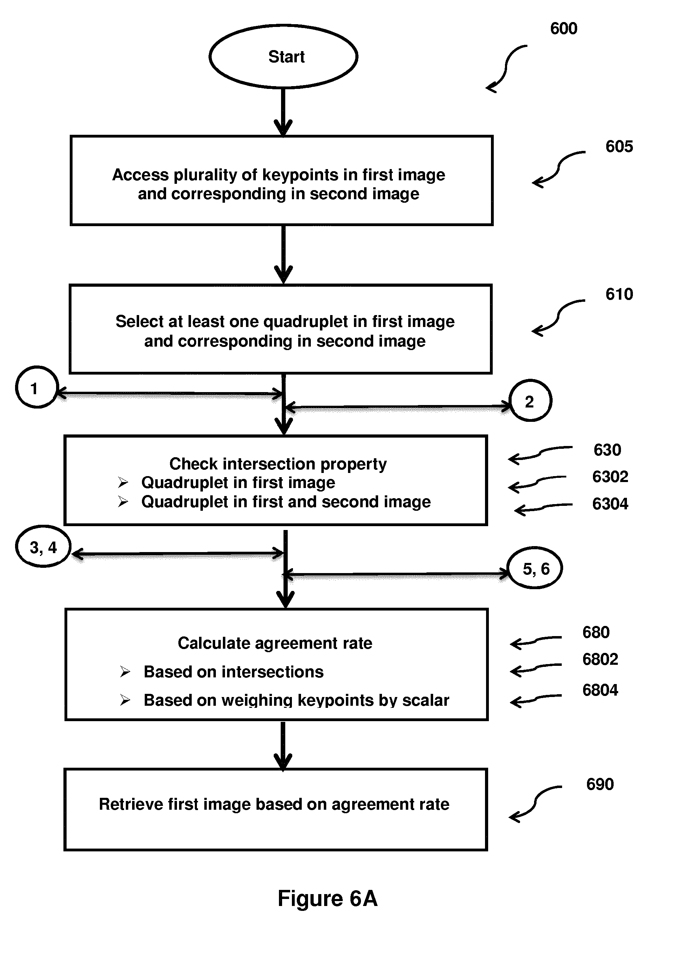

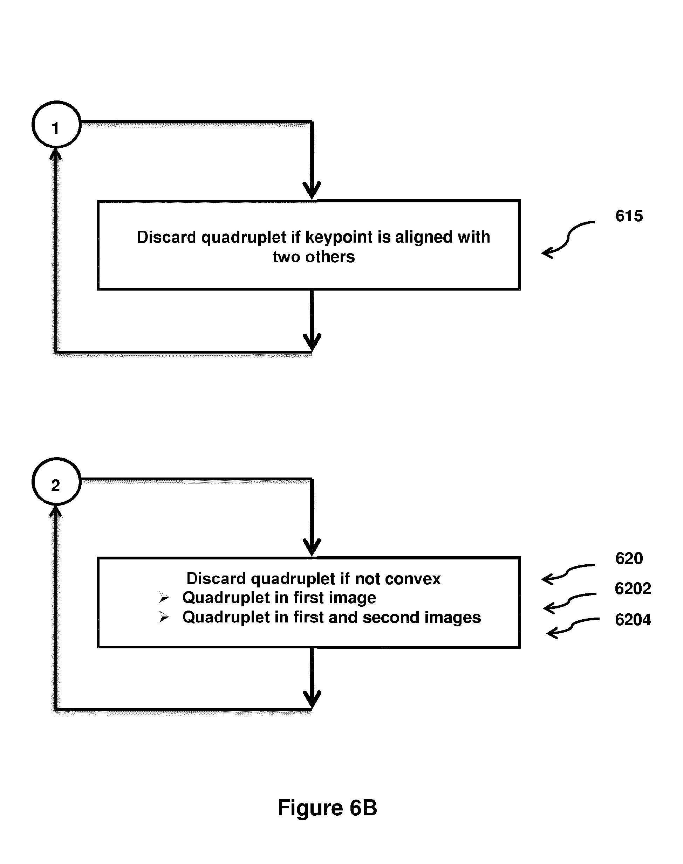

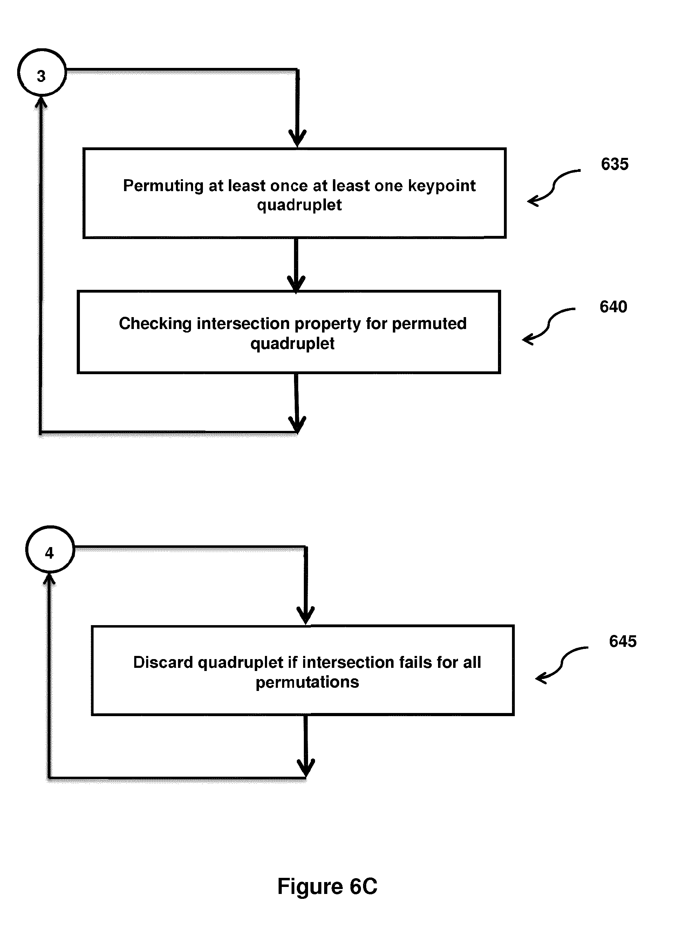

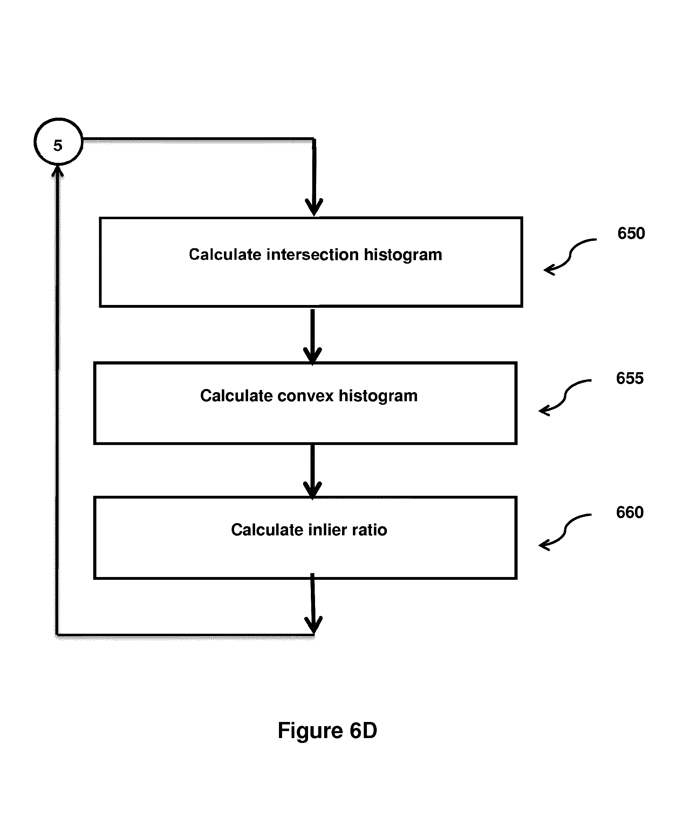

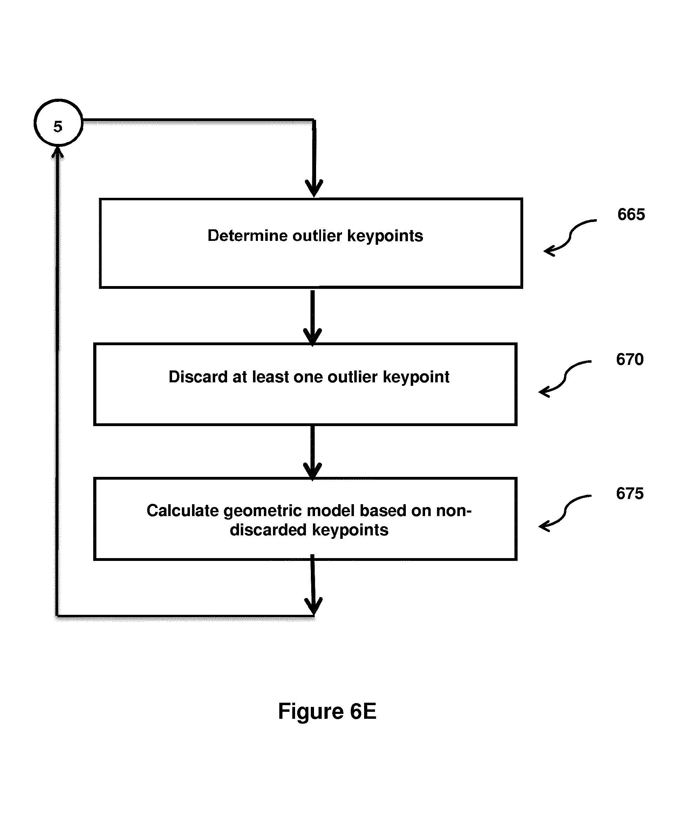

Figure 6A-E shows a flowchart 600 of a method of image retrieval according to the present principles including: accessing 605 a plurality of keypoints in a first image and a corresponding plurality of keypoints in a second image; selecting 610 at least one keypoint quadruplet in the first image and a corresponding at least one keypoint quadruplet in the second image; checking the intersection property 630 for the at least one keypoint quadruplet in the first image and the corresponding at least one keypoint quadruplet in the second image 6304; calculating 680 an agreement rate for the first and second images based on the intersection property; and retrieving 690 the first image based on the agreement rate. The method may further include: permuting 635 at least once the at least one keypoint quadruplet in the first image if the checking step fails for the keypoint quadruplet; and checking 640 again the intersection property for the at least one permuted keypoint quadruplet in the first image and the corresponding at least one permuted keypoint quadruplet in the second image. The method may further include: discarding 645 the at least one keypoint quadruplet in the first image after the step of checking again if the intersection property fails for all permutations. Discarding a keypoint quadruplet means that the keypoint quadruplet is discarded from further processing, but the keypoints may still be selected or present in other quadruplets. The method may further include: calculating 650 an intersection histogram for each keypoint in the first image based on the intersection property; calculating 655 a convex histogram for each keypoint in the first image based on the intersection property; and calculating 660 an inlier ratio based on the convex and intersection histograms; prior to the step of calculating an agreement rate, wherein the agreement rate is also a function of the inlier ratio. The method may further include: determining 665 outlier keypoints for the first image based on the inlier ratio; discarding 670 at least one outlier keypoint in the first image and corresponding at least one keypoint in the second image; and calculating 675 a geometric model between the first and second image based on the remaining non-discarded keypoints, prior to the step of calculating an agreement rate, wherein the agreement rate is also a function of the geometric model. The geometric model may be homographic or affine. The method may further include: discarding 6202 the at least one keypoint quadruplet in the first image prior to the step of checking if the at least one keypoint quadruplet is not a convex quadruplet. The method may further include: discarding 6204 the at least one keypoint quadruplet in the first image prior to the step of checking if the at least one keypoint quadruplet in the first image and corresponding quadruplet in the second image are not convex quadruplets. The method may further include: discarding 615 the at least one keypoint quadruplet in the first image prior to the step of checking if a keypoint in the at least one keypoint quadruplet is aligned with two other keypoints in the same keypoint quadruplet. The agreement rate may be based on the presence of intersections 6804 in corresponding keypoint quadruplets in the first and second images. The agreement rate may be based on the absence of intersections 6804 in corresponding keypoint quadruplets in the first and second images. The agreement rate may be based on a score obtained by weighting each keypoint by a scalar representing its quality or importance. A keypoint quadruplet contains distinct keypoints. The surface of a keypoint quadruplet may satisfy a dimension threshold.

It is to be understood that the present principles may be implemented in various forms of hardware, software, firmware, special purpose processors, or a combination thereof. Preferably, the present principles are implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

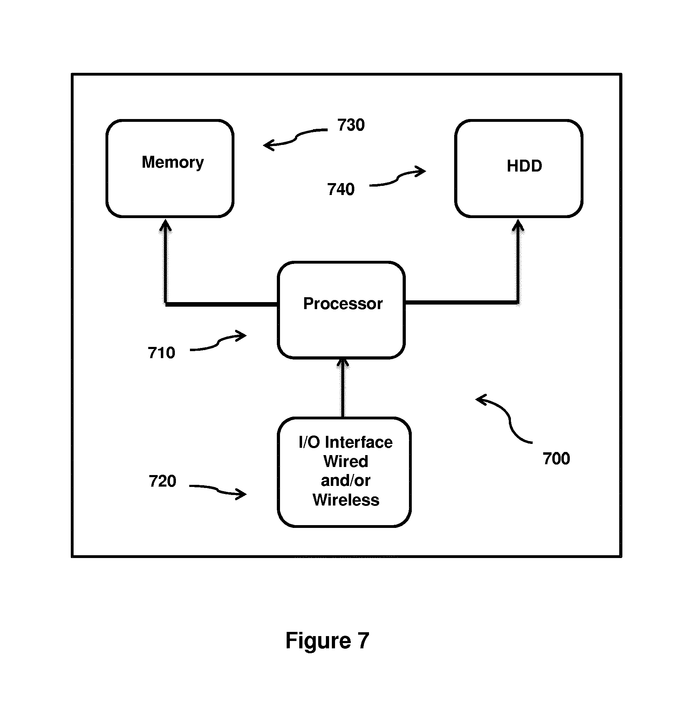

Figure 7 shows a block diagram of a minimum computing environment 700 within which the present principles can be implemented and executed. The computing environment 700 includes a processor 702, and at least one (and preferably more than one) I/O interface 704. The I/O interface can be wired or wireless and, in the wireless implementation is pre-configured with the appropriate wireless communication protocols to allow the computing environment 700 to operate on a global network (e.g., internet) and communicate with other computers or servers (e.g., cloud based computing or storage servers) so as to enable the present principles to be provided, for example, as a Software as a Service (SAAS) feature remotely provided to end users. One or more memories 706 and/or storage devices (HDD) 708 are also provided within the computing environment 700. The computing environment may be used to implement a node or device, and/or a controller or server who operates the storage system.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

**1.** A method of image retrieval comprising:

accessing (605) a plurality of keypoints in a first image and a corresponding plurality of keypoints in a second image;

**characterized in that** it further comprises the steps of:

selecting (610) at least one keypoint quadruplet in the first image and a corresponding at least one keypoint quadruplet in the second image;
checking (630) the intersection property for said at least one keypoint quadruplet in the first image and the corresponding at least one keypoint quadruplet in the second image;
calculating (680) an agreement rate for said first and second images based on said intersection property; and
retrieving (690) said first image based on the agreement rate.

2.  The method of claim 1 further **characterized by**:

permuting (635) at least once the at least one keypoint quadruplet in said first image if said checking step fails for said keypoint quadruplet; and
checking (640) again the intersection property for said at least one permuted keypoint quadruplet in the first image and the corresponding at least one permuted keypoint quadruplet in the second image.

3.  The method of claim 2 further **characterized by**:

discarding (645) the at least one keypoint quadruplet in the first image after the step of checking again if the intersection property fails.

4.  The method according to any of the previous claims further **characterized by**:

calculating (650) an intersection histogram for each keypoint in the first image based on the intersection property;
calculating (655) a convex histogram for each keypoint in the first image based on the intersection property; and
calculating (660) an inlier ratio based on said convex and intersection histograms,
prior to the step of calculating an agreement rate, wherein the agreement rate is also a function of said inlier ratio.

5.  The method according to any of the previous claims further **characterized by**:

determining (665) outlier keypoints for said first image based on said inlier ratio;
discarding (670) at least one outlier keypoint in the first image and corresponding at least one keypoint in the second image; and
calculating (675) a geometric model between the first and second image based on the non-discarded keypoints,
prior to the step of calculating an agreement rate, wherein the agreement rate is also a function of said geometric model.

6.  The method according to any of the previous claims further **characterized by**:

discarding (6202) the at least one keypoint quadruplet in the first image prior to the step of checking if the at least one keypoint quadruplet is not a convex quadruplet.

7.  The method according to any of the previous claims further **characterized by**:

discarding the (6204) at least one keypoint quadruplet in the first image prior to the step of checking if the at least one keypoint quadruplet in the first image and corresponding quadruplet in the second image are not a convex quadruplets.

8.  The method according to any of the previous claims further **characterized by**:

discarding (615) the at least one keypoint quadruplet in the first image prior to the step of checking if a keypoint in the at least one keypoint quadruplet is aligned with two other keypoints in the same keypoint quadruplet.

9.  An apparatus for image retrieval, said apparatus (700) comprising a processor (710), for receiving at least one input/output (720); and at least one memory (730) in signal communication with said processor, said processor being configured to:

access a plurality of keypoints in a first image and a corresponding plurality of keypoints in a second image;

**characterized in that** the processor is further configured to:

select at least one keypoint quadruplet in the first image and a corresponding at least one keypoint quadruplet in the second image;
check the intersection property for said at least one keypoint quadruplet in the first image and the corresponding at least one keypoint quadruplet in the second image;
calculate an agreement rate for said first and second images based on said intersection property; and
retrieve said first image based on the agreement rate.

10. The apparatus of claim 9, **characterized in that** the processor is further configured to:

permute at least once the at least one keypoint quadruplet in said first image if said checking the intersection rate fails for said keypoint quadruplet; and
check again the intersection property for said at least one permuted keypoint quadruplet in the first image and the corresponding at least one permuted keypoint quadruplet in the second image.

11. The apparatus of claim 10, **characterized in that** the processor is further configured to:

discard the at least one keypoint quadruplet in the first image after checking again the intersection property if the intersection property fails for all permutations.

12. The apparatus according to any of the previous claims, **characterized in that** the processor is further configured to:

calculate an intersection histogram for each keypoint in the first image based on the intersection property;
calculate a convex histogram for each keypoint in the first image based on the intersection property; and
calculate an inlier ratio based on said convex and intersection histograms,
prior to calculating an agreement rate, wherein the agreement rate is also a function of said inlier ratio.

13. The apparatus of claim 12, **characterized in that** the processor is further configured to:

determine outlier keypoints for said first image based on said inlier ratio;
discard at least one outlier keypoint in the first image and corresponding keypoint in the second image; and
calculate a geometric model between the first and second image based on the non-discarded keypoints,
wherein the agreement rate is also a function of said geometric model.

14. The apparatus according to any of the previous claims, **characterized in that** the processor is further configured to:

discard the at least one keypoint quadruplet in the first image before checking if the at least one keypoint quadruplet is not a convex quadruplet.

15. The apparatus according to any of the previous claims, **characterized in that** the processor is further configured to:

discard the at least one keypoint quadruplet in the first image before checking if the at least one keypoint quadruplet in the first image and corresponding quadruplet in the second image are not convex quadruplets.

Figure 1

**Figure 2**

**Figure 3**

Figure 4

Figure 5

600

Start

605

Access plurality of keypoints in first image
and corresponding in second image

610

Select at least one quadruplet in first image
and corresponding in second image

1        2

Check intersection property
➤ Quadruplet in first image
➤ Quadruplet in first and second image

630
6302
6304

3, 4        5, 6

Calculate agreement rate
➤ Based on intersections
➤ Based on weighing keypoints by scalar

680
6802
6804

Retrieve first image based on agreement rate

690

Figure 6A

①

Discard quadruplet if keypoint is aligned with two others     615

②

Discard quadruplet if not convex
➢ Quadruplet in first image
➢ Quadruplet in first and second images

620
6202
6204

**Figure 6B**

Figure 6C

```
    ┌─────────────────────────────────────────────┐
  ┌─╲5╱─┐                                           │
  └──┬──┘                                           │
     │                                              ▼
     │         ┌──────────────────────────────────────────┐
     │         │                                          │        650
     │         │       Calculate intersection histogram   │  ⟋
     │         │                                          │
     │         └──────────────────────────────────────────┘
     │                             │
     │                             ▼
     │         ┌──────────────────────────────────────────┐
     │         │                                          │        655
     │         │       Calculate convex histogram         │  ⟋
     │         │                                          │
     │         └──────────────────────────────────────────┘
     │                             │
     │                             ▼
     │         ┌──────────────────────────────────────────┐
     │         │                                          │        660
     │         │       Calculate inlier ratio             │  ⟋
     │         │                                          │
     │         └──────────────────────────────────────────┘
     │                             │
     └─────────────────────────────┘
```

**Figure 6D**

```
    ┌──────────────────────────────────────────────┐
 5  │              Determine outlier keypoints       │   ⟵ 665
    └──────────────────────────────────────────────┘
                          │
                          ▼
    ┌──────────────────────────────────────────────┐
    │           Discard at least one outlier keypoint │   ⟵ 670
    └──────────────────────────────────────────────┘
                          │
                          ▼
    ┌──────────────────────────────────────────────┐
    │      Calculate geometric model based on non-   │   ⟵ 675
    │              discarded keypoints               │
    └──────────────────────────────────────────────┘
```

Determine outlier keypoints — 665

Discard at least one outlier keypoint — 670

Calculate geometric model based on non-discarded keypoints — 675

**Figure 6E**

**Figure 7**

Europäisches
Patentamt

European
Patent Office

Office européen
des brevets

# EUROPEAN SEARCH REPORT

Application Number

EP 15 30 5457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATTA ABHIK ET AL: "A fast point pattern matching algorithm for robust spatially addressable bead encoding", 13TH IEEE INTERNATIONAL CONFERENCE ON BIOINFORMATICS AND BIOENGINEERING, IEEE, 10 November 2013 (2013-11-10), pages 1-7, XP032541312, DOI: 10.1109/BIBE.2013.6701567 [retrieved on 2014-01-02] * sect.III and IV * | 1-3, 6-11,14, 15 | INV. G06K9/46 G06F17/30 |
| X | John Hopcroft ET AL: "On Planar Point Matching", , 1 April 1989 (1989-04-01), XP055216344, Retrieved from the Internet: URL:http://www.dtic.mil/dtic/tr/fulltext/u2/a210106.pdf [retrieved on 2015-09-25] * sect.4 * | 1-3, 6-11,14, 15 | |
| A | DANIEL FLECK ET AL: "An Evaluation of Affine Invariant-Based Classification for Image Matching", 30 November 2009 (2009-11-30), ADVANCES IN VISUAL COMPUTING, SPRINGER BERLIN HEIDELBERG, BERLIN, HEIDELBERG, PAGE(S) 417 - 429, XP019135110, ISBN: 978-3-642-10519-7 * the whole document * | 1-15 | TECHNICAL FIELDS SEARCHED (IPC) G06K G06T G06F |

The present search report has been drawn up for all claims

| Place of search | Date of completion of the search | Examiner |
|---|---|---|
| The Hague | 28 September 2015 | Darolti, Cristina |